# EUROPEAN PATENT APPLICATION

(11) **EP 1 640 413 A2**
(43) Date of publication of application: **29.03.2006**
(21) Application number: 04746452.4
(22) Date of filing: 25.06.2004
(51) Int. Cl.: C08L 9/02, C08L 33/06, C08L 33/18, F16L 11/04

(54) **POLYMER ALLOY, CROSSLINKED OBJECT, AND FUEL HOSE**

(30) Priority: 27.06.2003 JP 2003185374
(71) Applicant: ZEON CORPORATION, Tokyo 100-8246 (JP)
(72) Inventor: KOMIYAMA, Shinji, Chiyoda-ku, Tokyo 100-8246 (JP); NUMATA, Hiromi, Chiyoda-ku, Tokyo 100-8246 (JP); YOKOYAMA, Seiji, Chiyoda-ku, Tokyo 100-8246 (JP)
(74) Representative: Albrecht, Thomas
(86) International application number: PCT/JP2004/008983
(87) International publication number: WO 2005/000550

(57) **Abstract**

A polymer alloy comprising 40 to 90 wt% of nitrile copolymer rubber (A) and 10 to 60 wt% of an acrylic resin (B), wherein the acrylic resin (B) comprises (meth)acrylic ester monomer units and α,β-ethylenically unsaturated nitrile monomer units and a content of said α,β-ethylenically unsaturated nitrile monomer units is larger than 27 wt% but not larger than 65 wt% with respect to a total amount of the acrylic resin (B) is used. According to the invention, it is possible to provide a polymer alloy suitably used as a fuel hose material and having excellent balance of ozone resistance and resistance to fuel oils (in particular, resistance to alcohol-containing gasoline) while maintaining cold resistance and gasoline impermeability.

## Description

### TECHNICAL FIELD

The present invention relates to a polymer alloy suitably used as a fuel hose material; a crosslinked object of the polymer alloy; and a fuel hose composed of the crosslinked object.

### BACKGOUND ART

Since nitrile copolymer rubber, such as acrylonitrile-butadiene rubber, has excellent oil resistance, it has been variously used, for example, as a fuel hose used for a fuel pipe for vehicles. However, nitrile copolymer rubber is poor in ozone resistance and cold resistance, so that a polymer alloy with improved ozone resistance, etc. obtained by blending a vinyl chloride resin has been proposed and widely used as auto parts mainly as a fuel hose.

However, a vinyl chloride resin included in the polymer alloy may cause an environmental issue because chloride may be released by disposal, so that there is a demand for a new material capable of improving ozone resistance and cold resistance without including chloride and other halogen.

As a technique of improving ozone resistance without using vinyl chloride or other halogen containing resin, a polymer alloy of nitrile copolymer rubber and a vinyl based resin having a crosslinkable functional group has been proposed (refer to the Patent Article 1).

Because a crosslinkable functional group is included in a part of the vinyl based resin, however, the polymer alloy described in the patent article 1 may be cured due to a crosslinking reaction when drying, etc. in some cases, so that the vinyl based resin is not sufficiently finely dispersed in the nitrile copolymer rubber, resulting in poor ozone resistance.

Furthermore, in recent years, it has been desired to reduce evaporation of gasoline into the air, and a fuel hose for a vehicle, etc. is also required to have gasoline impermeability of a certain standard. Also, there is a demand for a material also having excellent fuel resistance particular to an alcohol-containing gasoline preferably used in a variety of fuel oils among gasoline, but such a characteristic has not been improved sufficiently in the polymer alloy.

Patent Article 1: The Japanese Unexamined Patent Publication No. 2001-226527

### DISCLOSURE OF THE INVENTION

In consideration of the above circumstances, an object of the present invention is to provide a polymer alloy suitably used as a fuel hose material having excellent cold resistance, ozone resistance, gasoline impermeability and resistance to fuel oils (in particular, resistance to alcohol-containing gasoline); a crosslinked material of the polymer alloy; and a fuel hose composed of the crosslinked substance.

To attain the above object, the inventions 1 to 9 below are provided.
1. A polymer alloy comprising 40 to 90 wt% of nitrile copolymer rubber (A) and 10 to 60 wt% of an acrylic resin (B), wherein:
   said acrylic resin (B) comprises (meth)acrylic ester monomer units and α,β-ethylenically unsaturated nitrile monomer units; and
   a content of said α,β-ethylenically unsaturated nitrile monomer units is larger than 27 wt% but not larger than 65 wt% with respect to a total amount of said acrylic resin (B).
2. The polymer alloy as set forth in 1 above, wherein said nitrile copolymer rubber (A) comprises (α,β-ethylenically unsaturated nitrile monomer units, and a content of the α,β-ethylenically unsaturated nitrile monomer units in said nitrile copolymer rubber (A) is 30 to 80 wt%.
3. The polymer alloy as set forth in 1 above, wherein a content of said (meth)acrylic ester monomer units in said acrylic resin (B) is 40 to 65 wt%.
4. The polymer alloy as set forth in 1 above, wherein a content of said α,β-ethylenically unsaturated nitrile monomer units with respect to a total amount of said acrylic resin (B) is 35 wt% or larger and 60 wt% or smaller.
5. The polymer alloy as set forth in 1 above, wherein a content of said nitrile copolymer rubber (A) with respect to a total amount of said nitrile copolymer rubber (A) and said acrylic resin (B) is 60 to 80 wt%.
6. The polymer alloy as set forth in 1 above, wherein a content of said acrylic resin (B) with respect to a total amount of said nitrile copolymer rubber (A) and said acrylic resin (B) is 20 to 40 wt%.
7. The polymer alloy as set forth in 1 above, furthermore comprising a crosslinking agent.
8. A crosslinked object obtained by crosslinking the polymer alloy as set forth in 7 above.
9. A fuel hose comprising the crosslinked object as set forth in 8 above.
Note that "to" between numbers means that the numbers are included as a lower limit value and an upper limit value unless otherwise mentioned.

### BEST MODE FOR CARRYING OUT THE INVENTION

### Polymer Alloy

A polymer alloy of the present invention comprises a nitrile copolymer rubber (A) and an acrylic resin (B).

### Nitrile Copolymer Rubber (A)

Nitrile copolymer rubber (A) used in the present invention is obtained by copolymerizing an α,β-ethylenically unsaturated nitrile monomer and other monomer capable of copolymerizing with the monomer and, in accordance with need, hydrogenating carbon-carbon unsaturated bonds of the main chain.

As an α,β-ethylenically unsaturated nitrile monomer, acrylonitrile, methacrylonitrile and α-chloroacrylonitrile, etc. may be mentioned. Among them, acrylonitrile is preferable. A content of the α,β-ethylenically unsaturated nitrile monomer units in the nitrile copolymer rubber (A) is preferably 30 to 80 wt%, and more preferably 35 to 60 wt%. When the content of the α,β-ethylenically unsaturated nitrile monomer unit is too little, it is liable that resistance to fuel oils becomes poor in the crosslinked object, while when too much, cold resistance tends to declines.

As other monomer capable of copolymerizing with the α,β-ethylenically unsaturated nitrile monomer, a conjugated diene monomer, nonconjugated diene monomer, α-olefin, aromatic vinyl monomer, fluorine-containing vinyl-based monomer, α,β-ethylenically unsaturated monocarboxylic acid, α,β-ethylenically unsaturated polycarboxylic acid or an hydride thereof, α,β-ethylenically unsaturated carboxylic ester monomer and a copolymerizable antioxidant, etc. may be mentioned.

As a conjugated diene monomer, 1,3-butadiene, isoprene, 2,3-dimethyl-1,3-butadiene and 1,3-pentadiene, etc. may be mentioned. Among them, 1,3-butadiene is preferable. As a nonconjugated diene monomer, those having the carbon number of 5 to 12 are preferable and 1,4-pentadiene, 1,4-hexadiene, vinyl norbornene and dicyclopentadiene, etc. may be mentioned. As an α-olefin, those having the carbon number of 2 to 12 are preferable and ethylene, propylene, 1-buten, 4-methyl-1-penten, 1-hexene and 1-octene may be mentioned. As an aromatic vinyl monomer, styrene, α-methylstyrene and vinyl pyridine, etc. may be mentioned. As a fluorine-containing vinyl-based monomer, fluoroethyl vinylether, fluoropropyl vinylether, o-trifluoromethylstyrene, pentafluoro vinyl benzoate, difluoroethylene and tetrafluoroethylene, etc. may be mentioned. As an α,β-ethylenically unsaturated monocarbonic acid, acrylic acid and methacryl acid, etc. may be mentioned. As α,β-ethylenically unsaturated polycarboxylic acid, itaconic acid, fumaric acid and maleic acid, etc. may be mentioned. As an hydride of the α,β-ethylenically unsaturated polycarboxylic acid, anhydrous itaconic acid and anhydrous maleic acid, etc. may be mentioned.

As an α,β-ethylenically unsaturated carboxylic ester monomer, methylacrylate, ethylacrylate, n-dodecil acrylate, methylmethacrylate, ethylmethacrylate and other (meth)acrylate including an alkyl group having the carbon number of 1 to 18; methoxymethylacrylate, methoxyethylmethacrylate and other (meth)acrylate including an alkoxyalkyl group having the carbon number of 2 to 12; α-cyanoethylacrylate, β-cyanoethylacrylate, cyanobutylmethacrylate and other (meth)acrylate including a cyanoalkyl group having the carbon number of 2 to 12; 2-hydroxyethylacrylate, 2-hydroxypropylacrylate, 2-hydroxyethylmethacrylate and other (meth)acrylate including a hydroxyalkyl group having the carbon number of 1 to 12; maleic acid monoethyl, itaconic acid mono n-butyl and other α,β-ethylenic dicarbonic acid monoalkylester; maleic acid dimethyl, fumaric acid dimethyl, itaconic acid dimethyl, etaconic acid diethyl and other α,β-ethylenic dicarbonic acid dialkylester; dimethyl aminomethylacrylate, diethylaminoethylacrylate and other α,β-ethylenically unsaturated carboxylic ester including an amino group; trifluoroethyl acrylate, tetrafluoropropyl methacrylate and other fluoroalkyl group containing (meth)acrylate; fluorobenzyl acrylate, fluorobenzyl methacrylate and other fluorine-substituted benzyl(meth)acrylate; etc. may be mentioned.

As a copolymerizable antioxidant, N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinyl benzyloxy)aniline and N-phenyl-4-(4-vinyl benzyloxy)aniline, etc. may be mentioned.

Preferably, nitrile copolymer rubber (A) to be used in the present invention substantially dose not comprise halogen. Specifically, a halogen content is preferably 0.5 wt% or smaller, more preferably 0.1 wt% or smaller, and particularly preferably 0 wt%. There is an advantage that the smaller the halogen content, the more reduced a halogen releasing amount at disposal becomes.

The Mooney viscosity (ML₁₊₄, 100°C) of the nitrile copolymer rubber (A) to be used in the present invention is preferably 10 to 300, more preferably 20 to 250, and particularly preferably 30 to 200. when the Mooney viscosity is too low, a mechanical property of the crosslinked object may be deteriorated, while when too high, the workability may deteriorate.

A production method of the nitrile copolymer rubber (A) to be used in the present invention is not particularly limited and it may be produced by polymerizing a monomer by following a well-known method.

### Acrylic Resin (B)

Acrylic resin (B) to be used in the present invention comprises (meth)acrylic ester monomer units. A content of the (meth)acrylic ester monomer units in the acrylic resin (B) is preferably 40 to 65 wt%.

Furthermore, the acrylic resin (B) to be used in the present invention comprises α,β-ethylenically unsaturated nitrile monomer units. As an α,β-ethylenically unsaturated nitrile monomer units, those in the case of the nitrile copolymer rubber (A) may be mentioned. Among them, (meth)acrylonitrile is preferable.

A content of the α,β-ethylenically unsaturated nitrile monomer units in the entire amount of the acrylic resin (B) is larger than 27 wt% but not larger than 65 wt%, and preferably 35 wt% or larger and 60 wt% or smaller. By regulating the α,β-ethylenically unsaturated nitrile monomer units to be in the above range, the resistance to fuel oils (in particular, resistance to alcohol-containing gasoline) can be improved without declining the ozone resistance of the polymer alloy of the present invention. When the content of the α,β-ethylenically unsaturated nitrile monomer units is too small, the resistance to alcohol-containing gasoline tends to decline, while when too much, the ozone resistance tends to decline.

The (meth)acrylic ester monomer units in the acrylic resin (B) to be used in the present invention may be any of the forms of acrylate ester homopolymer units; methacrylate ester monopolymer units; copolymer units of acrylate ester and methacrylate ester; and copolymer units of either or both of acrylate ester and methacrylate ester with a monomer capable of copolymerizing with them.

As a (meth)acrylate ester monomer, (meth)acrylate methyl, (meth)acrylate ethyl, (meth)acrylate propyl, (meth)acrylate n-butyl, (meth)acrylate isobutyl, (meth)acrylate t-butyl, (meth)acrylate 2-ethylhexyl and (meth)acrylate octyl, etc. may be mentioned.

A monomer capable of copolymerizing with (meth)acrylate ester is not particularly limited as far as it is capable of copolymerizing with either or both of acrylate ester and methacrylate ester, but monomers wherein unsaturated bonds are not introduced to the main chain are preferable and monomers not introducing a crosslinking functional group are preferable. As such monomers, an aromatic vinyl monomer, a vinyl ester monomer, and a vinyl ether monomer, etc. may be mentioned. As an aromatic vinyl monomer, styrene, vinyl toluene and α-methylstylene, etc. may be mentioned. As a vinyl ester monomer, vinyl acetate and vinyl propionate, etc. may be mentioned. As a vinyl ether monomer, methylvinyl ether, ethylvinyl ether and hydroxybutylvinyl ether, etc. may be mentioned.

Preferably, the acrylic resin (B) to be used in the present invention substantially does not comprise halogen. Specifically, a halogen content is preferably 0.5 wt% or smaller, more preferably 0.1 wt% or smaller, and particularly preferably 0 wt%. The smaller the halogen content is, it is possible to obtain the same advantages as those in the case of the nitrile copolymer rubber (A) explained above.

A weight average molecular weight (Mw) of the acrylic resin (B) to be used in the present invention is not particularly limited but, in a polystylene conversion value in the gel permeation chromatography (GPC), it is preferably 50,000 to 4,000,000, more preferably 100,000 to 2,000,000, and particularly preferably 200,000 to 1,500,000. When the weight average molecular weight is too small, the ozone resistance tends to decline. Also, when the weight average molecular weight is too large, the workability tends to decline.

A production method of the acrylic resin (B) to be used in the present invention is not particularly limited, but it is preferably in a particle state obtained by emulsion polymerization and suspension polymerization, etc. Seed polymerization may be performed in the emulsion polymerization and suspension polymerization, etc.

An average particle diameter of the acrylic resin (B) is not particularly limited when obtaining it in a particle state, but it is preferably 10 µm or smaller, and more preferably 2 µm or smaller. When the average particle diameter is too large, the ozone resistance tends to decline. An average particle diameter of the acrylic resin (B) can be controlled by the polymerization condition. Alternately, the particle diameter of the acrylic resin (B) may be adjusted by pulverizing a mass of acrylic resin (B) by a pulverizer, such as a jet gas pulverizer, a mechanical collision type pulverizer, a roll mill, a hammer mill and an impeller breaker, and introducing the obtained pulverized result to a classifier, such as a wind power classifier and a sieve classifier, to classifying.

A content of a nitrile copolymer rubber (A) with respect to a total of the nitrile copolymer rubber (A) and an acrylic resin (B) is 40 to 90 wt%, and preferably 60 to 80 wt%. When the content of the nitrile copolymer rubber (A) is too small and a content of the acrylic resin (B) is too large, the rubber elasticity is lost, while when the content of the nitrile copolymer rubber (A) is too large and a content of the acrylic resin (B) is too small, the ozone resistance tends to decline.

In addition to the nitrile copolymer rubber (A) and acrylic resin (B), a polymer alloy according to the present invention may include other rubber and resin in a range of not hindering the effects and objects of the present invention. A content of the rubber or resin is normally 20 parts by weight or smaller, and preferably 15 parts by weight or smaller with respect to a total of 100 parts by weight of the nitrile copolymer rubber (A) and acrylic resin (B). When the content of the rubber, etc. is too large, the gasoline impermeability, cold resistance and ozone resistance of the polymer alloy may decline.

A polymer alloy according to the present invention may include compounding agents, such as carbon black, silica and other reinforcing agent; calcium carbonate, magnesium carbonate, clay, kaolin clay, talc, pulverized talc, mica, aluminum hydroxide, magnesium hydroxide, silicic acid, magnesium silicate, aluminum silicate, calcium silicate and other filler; α,β-unsaturated carboxylate metal salt; pigment; and antioxidant; etc.

Furthermore, when an ester compound (c) of a dicarboxylic compound (a) and alcohol having ether bonds in its molecular (b) is blended in the polymer alloy of the present invention, the ozone resistance improves, which is preferable.

General Formula 1 HOOCRCOOH

("R" in the formula indicates an alkylene group having the carbon number of 2 to 10.)
An alkylene group R of the dicarboxylic compound (a) expressed by the general formula 1 (hereinafter, also referred to as a compound (a)) is preferably straight-chain, and those having a carboxyl group at both ends of the straight-chain alkylene group are particularly preferable. Also, the carbon number of the alkylene group R is 2 to 10, and preferably 4 to 8. When the carbon number of the alkylene group is too small, the ozone resistance of the vulcanized substance becomes poor. Inversely, when the carbon number is too large, a rubber composition cannot be kneaded or an ester compound (c) bleeds to a surface of the vulcanized substance.

As specific examples of the compound (a), succinic acid, glutaric acid, methyl succinic acid, adipic acid, dimethyl succinic acid, pimelic acid, suberic acid, tetramethyl succinic acid, azelaic acid and sebacic acid, etc. may be mentioned.

Alcohol (b) having ether bonds in its molecular (hereinafter, also referred to as alcohol (b)) preferably has the carbon number of 4 to 10, more preferably 6 to 8, and monohydroxy alcohol is preferable. The number of ether bonds included in molecular of the alcohol (b) is preferably 1 to 4, and more preferably 1 to 2. When the number of ether bonds is too large, the ozone resistance of the crosslinked object may become poor.

As specific examples of preferable alcohol (b) are methoxypropyl alcohol, ethoxyethyl alcohol, propoxymethyl alcohol and other alcohol having the carbon number of 4 and the number of ether bonds of 1; dimethoxyethyl alcohol, methoxyethoxymethyl alcohol and other alcohol having the carbon number of 4 and the number of ether bonds of 2; methoxybutyl alcohol, ethoxypropyl alcohol, propoxyethyl alcohol and other alcohol having the carbon number of 5 and the number of ether bonds of 1; dimethoxypropyl alcohol, methoxyethoxyethyl alcohol, diethoxymethyl alcohol and other alcohol having the carbon number of 5 and the number of ether bonds of 2; butoxyethyl alcohol, propoxypropyl alcohol, ethoxybutyl alcohol, methoxypencyl alcohol, pentoxyethyl alcohol and other alcohol having the carbon number of 6 and the number of ether bonds of 1; dimethoxybutyl alcohol, methoxyethoxypropyl alcohol, diethoxyethyl alcohol and other alcohol having the carbon number of 6 and the number of ether bonds of 2; butoxypropyl alcohol, propoxybutyl alcohol, ethoxypencyl alcohol, methoxyhexyl alcohol and other alcohol having the carbon number of 7 and the number of ether bonds of 1; dimethoxypencyl alcohol, methoxyethoxybutyl alcohol, methoxypropoxy propane and other alcohol having the carbon number of 7 and the number of ether bonds of 2; pentoxypropyl alcohol, butoxybutyl alcohol, propoxypencyl alcohol, ethoxyhexyl alcohol, methoxyheptyl alcohol and other alcohol having the carbon number of 8 and the number of ether bonds of 1; butoxyethoxyethyl alcohol, propoxypropoxyethyl alcohol, propoxyethoxypropyl alcohol, ethoxypropoxypropyl alcohol, methoxybutoxypropyl alcohol, ethoxyethoxybutyl alcohol and other alcohol having the carbon number of 8 and the number of ether bonds of 2; may be mentioned.

As the ester compound (c), what obtained by freely combining a compound (a) expressed by the above general formula 1 and alcohol having ether bonds (b) may be used. Normally, a monoester compound and diester compound are used. A diester compound is preferable. As preferable specific examples, dibutoxyethyl adipate, di(butoxyethoxyethyl)adipate, etc. may be mentioned, and di(butoxyethoxyethyl)adipate is particularly preferable.

A blending quantity of the ester compound (c) is preferably 5 to 85 parts by weight, preferably 15 to 70 parts by weight, and more preferably 25 to 60 parts by weight with respect to 100 parts by weight of nitrile copolymer rubber (A) in the polymer alloy. When the blending quantity of the ester compound is too small, the ozone resistance of the crosslinked object becomes poor, while when too large, the rubber elasticity becomes poor.

A polymer alloy according to the present invention can be fabricated by a dry blend method for mixing the nitrile copolymer rubber (A), acrylic resin (B) and compounding agents, etc. explained above to be blended in accordance with need by using a roll, Banbury or other mixer. Alternately, it may be fabricated by a latex coprecipitation method for mixing the nitrile copolymer rubber (A) and an acrylic resin (B) in a latex state and coagulating.

### Crosslinkable Polymer Alloy

In the present invention, a cross-linking agent may be furthermore compounded in the polymer alloy explained above to obtain a crosslinkable polymer alloy. As the cross-linking agent, a sulfur cross-linking agent, organic peroxide and polyamine cross-linking agent, etc. may be mentioned.

As the sulfur cross-linking agent, powdered sulfur, precipitated sulfur and other sulfur; 4,4'-dityomorpholine, tetramethylthiuram disulfide, tetraethylthiuram disulfide, polymer polysulfide and other organic sulfur compound; etc. may be mentioned.

As the organic peroxide, dialkyl peroxides, diacyl peroxides, peroxy esters, etc. may be mentioned. As the dialkyl peroxide, dicumyl peroxide, di-t-butyl peroxide, 2,5-dimethyl-2,5-di(t-butyl peroxy)-3-hexine, 2,5-dimethyl-2,5-di(t-butyl peroxy)hexane, 1,3-bis(t-butyl peroxy isopropyl)benzene, etc. may be mentioned. As the diacyl peroxide, benzoyl peroxide and isobutyryl peroxide, etc. may be mentioned. As the peroxy ester, 2,5-dimethyl-2,5-bis(benzoyl peroxy)hexane, t-butyl peroxy isopropyl carbonate, etc. may be mentioned.

A polyamine cross-linking agent is a compound having two or more amino groups, wherein a plurality of hydrogen of aliphatic hydrocarbon and aromatic hydrocarbon is substituted to an amino group or a hydrazide structure, that is, the structure expressed by CONHNH₂. As the polyamine cross-linking agent, aliphatic polyamines, aromatic polyamines, compounds having two or more hydrazide structures, etc. may be mentioned. As the aliphatic polyamines, hexamethylene diamine, hexamethylene diamine carbamate, tetramethylenepentamine, hexamethylene diamine-cinnamaldehyde adduct, hexamethylene diamine-dibenzoic acid, etc. may be mentioned. As the aromatic polyamines, 4,4'-methylendianiline, 4,4'-oxydiphenylamine, m-phenylenediamine, p-phenylenediamine and 4,4'-methylenebis(o-chloroaniline), etc. may be mentioned. As the compound having two or more hydrazide structures, isophthalate dihydeazide, adipic acid dihydrazide and cebacic acid dihydrazide, etc. may be mentioned.

A blending quantity of a cross-linking agent varies due to a kind thereof, but it is 0.1 to 10 parts by weight, preferably 0.3 to 7 parts by weight, and particularly preferably 0.5 to 5 parts by weight with respect to 100 parts by weight of nitrile copolymer rubber (A). When a use amount of the cross-linking agent is too small, the compression set becomes large, while when too much, the flex fatigue resistance becomes poor.

When using a sulfur cross-linking agent, normally, a cross-linking accelerator is used together. As the cross-linking accelerator, a zinc oxide, sulfenic amide cross-linking accelerator, guanidine cross-linking accelerator, thiazole cross-linking accelerator, thiuram cross-linking accelerator, dithioate cross-linking accelerator, etc. may be mentioned. A use quantity of the cross-linking accelerator is not particularly limited and may be determined in accordance with a use object of the crosslinked object, required performance, a kind of the sulfur cross-linking agent and a kind of the cross-linking accelerator, etc.

When using an organic peroxide, normally a cross-linking auxiliary is used together. As the cross-linking auxiliary, triallyl cyanurate, trimethylolpropane trimethacrylate and N,N'-m-phenylene bismaleimide, etc. may be mentioned. Those may be used by being dispersed in clay, calcium carbonate or silica, etc. to improve workability of the polymer alloy. A use quantity of the cross-linking auxiliary is not particularly limited and may be determined in accordance with a use object of the crosslinked object, required performance, a kind of the cross-linking agent and a kind of the cross-linking auxiliary, etc.

A fabrication method of a cross-linkable polymer alloy according to the present invention is not particularly limited and a well known method for blending a cross-linking agent into rubber may be used. Note that it is preferable that blending of a cross-linking agent is performed by a method, by which sheering heat is hard to arise, so as not to proceed crosslinking at the time of mixing. For example, it is preferable that Banbury mixing is performed without compounding any cross-linking agent, then, the cross-linking agent is compounded and final mixing is performed with a roll.

### Crosslinked Object

In the present invention, the crosslinkable polymer alloy can become a crosslinked object by being heated to reach a crosslinking start temperature of a crosslinking agent included in the polymer alloy or higher. The crosslinking temperature may be determined in accordance with characteristics of the acrylic resin (B), but in a general cross-linking agent, it is preferably 100 to 200°C, more preferably 130 to 190°C, and particularly preferably 140 to 180°C. When the temperature is too low, it is liable that the crosslinking time becomes too long and the crosslinking density becomes low.

The crosslinking time varies in accordance with the crosslinking method, crosslinking temperature and the shape, etc., but a range of 1 minute to 5 hours is preferable in terms of the crosslinking density and productivity. Also, it may not be crosslinked enough to the inside thereof due to a shape and size, etc. of mold, so that secondary crosslinking may be performed.

A heating method for crosslinking may be suitably selected from methods to be used for crosslinking rubber, such as press heating, steam heating, oven heating and hot air heating, etc.

The crosslinked objects explained above exhibit small gasoline impermeability, low embrittlement temperature, excellent ozone resistance and, furthermore, excellent resistance to fuel (in particular, resistance to alcohol-containing gasoline). Therefore, it is suitably used as a material of industrial parts, such as hose, belt, seal and roll. Specifically, it is suitably used as a material of a fuel hose, timing belt, packing, oil-seal, OA roll, vehicle interior parts, seal of fuel system and gasket. Among them, it is particularly preferable as a material of a fuel home.

### Fuel Hose

A fuel hose according to the present invention is composed of the crosslinked object explained above. The structure is not particularly limited and may be a single layer and a multilayer structure of two or more layers including other rubber layer and resin layer, etc. A production method of the fuel hose is not particularly limited and it is produced by conventionally well known methods. But it is preferably produced by molding a crosslinkable polymer alloy including the crosslinking agent explained above by injection molding, extrusion molding or other conventionally known molding method and crosslinking by a steam crosslinking method, etc. to be a predetermined shaped hose.

The fuel hose of the present invention has excellent vapor fuel impermeability, so that it is excellent as a vehicle fuel hose. As specific examples of the vehicle fuel hose are a fuel filler hose generally called as a filler hose, filler neck hose and an inlet hose, etc. for supplying fuel from a fuel supply inlet to a fuel tank; a fuel breather hose for maintaining a pressure inside the fuel tank to be an atmospheric pressure; and a hose called a fuel evaporation hose for supplying vapor gasoline generated in the fuel tank to an engine; etc. may be mentioned. Furthermore, hoses called a vapor hose (fuel vapor hose), fuel hose, in-tank hose and ORVR (onboard refueling vapor recovery) regulatory measure hose, etc. are also included.

### EXAMPLES

Below, the present invention will be explained in detail by taking examples and comparative examples. Below, "parts" and "%" are based on weight unless otherwise mentioned.

### Example 1

First, an acrylic resin (B) was produced as below. In a reactor, 150 parts of ion exchange water, 1.5 parts of potassium oleate (emulsion), 0.3 part of ammonium persulfate (polymerization initiator), 60 parts of ethyl acrylate and 40 parts of acrylonitrile were put in and brought to react at a temperature of 80°C for 12 hours while agitating, then, polymerization was stopped. A part of the obtained polymerization reaction liquid was sampled and the solid quantity was measured. The results were a polymerization conversion of 98.1% and the solid content concentration of 39.2% or so. The obtained acrylic resin (acrylic resin b1) included acrylonitrile monomer units in an amount of 38.7% and was particulate having an average particle diameter of 0.11 µm or so. A size of the acrylic resin particles was measured by using a light scattering particle size analyzer (model N4 made by Coulter Inc.). Particles of the acrylic resin b1 were dissolved in tetrahydrofuran, and a weight average molecular weight thereof measured by the gel permeation chromatography was 1,120,000 based on polystyrene as a standard substance. The polymerization reaction liquid was filtrated to collect particles of the acrylic resin b1, the collected particles were dispersed in pure water, the cleaning step of filtrating and collecting were performed again for twice, then, the result was dried, so that particles of the acrylic resin b1 were obtained. A glass transition temperature of the particles were measured and was 21.0°C. The glass transition temperature was measured by a differential scanning calorimetry method (DSC method). Note that particles of the acrylic resin b1 did not have a melting temperature. Later explained acrylic resins b2 to b6 were also the same.

Next, 65 parts of acrylonitrile-butadiene copolymer rubber (the Mooney's viscosity measured based on the JIS-K6300 was 78) having acrylonitrile monomer units of 42.5% and 35 parts of particles of acrylic resin b1 as above were used as a nitrile copolymer rubber (A) to produce a polymer alloy for a fuel hose by using a B-type Banbury (a temperature in the cavity was 50°C).

The obtained polymer alloy was added with 60 parts of carbon black (Asahi #50 made by Asahi Carbon Co., Ltd.), 5 parts of plasticizer A (dioctyl phthalate), 15 parts of plasticizer B (adipic acid ester: ADK Cizer RS-107 made by Asahi Denka Co., Ltd.), 1 part of stearic acid, 5 parts of zinc oxide (zinc oxide #1), 0.5 part of sulfur (sieved by a 325 mesh), 1.5 parts of N-cyclohexyl-2-benzothiazolyl sulfonamide and 1.5 parts of tetramethylthiuram disulfide, so that a crosslinkable polymer alloy was obtained. The crosslinkable polymer alloy was subjected to press crosslinking under a condition of 160°C so as to produce a crosslinked sheet having a thickness of 2 mm for testing.

The crosslinked sheet was used for evaluating cold resistance, ozone resistance, gasoline impermeability and resistance to fuel oils.

Cold resistance (a low temperature characteristic) was evaluated by obtaining temperatures T2, T5, T10 and T100 (all units:°C), at which specific elastic modulus of the test crosslinked sheet became 2, 5, 10 and 100, by the Gehman torsion test (JIS-K6261). In the cold resistance, the lower the temperature is, the more superior the cold resistance is. The results are shown in Table 1.

The ozone resistance was evaluated based on the JIS-K6259 at 40°C with ozone concentration of 50 pphm and expansion by 50% on states after 24 hours, 48 hours, 96 hours and 144 hours. The less cracks are, which will be explained later on, the superior the ozone resistance is. The evaluation was indicated by marks below.
NC: No arising of cracks observed.
A2 and B2: The alphabets indicate the number of cracks, wherein B is larger than A, and C is larger than B. The larger the number is, the larger the crack is.
Cut: Crack became too large to cut the test crosslinked sheet. The results are shown in Table 1.

The gasoline impermeability was evaluated by an aluminum cup method on a fuel oil C (Fuel-C obtained by mixing isooctane and toluene by a volume ratio of 1:1). In the aluminum cup method, 50 ml of fuel oil C was poured in an aluminum cup having a capacity of 100ml, the cup was capped with the test crosslinked sheet having a thickness of 2 mm cut to be a disk shape having a diameter of 61 mm, an area of separating the outside and inside of the aluminum cup by the sheet was adjusted by a clamp to be 25.5 m², the aluminum cup was left in a constant temperature chamber, the weight was measured every 24 hours to measure permeated amount (units: g·mm/cm²·day) of the fuel oil C, and the maximum value was considered as the permeation amount. The smaller the maximum value of the permeation amount is, the more superior the gasoline impermeability is. The results are shown in Table 1.

The resistance to fuel oils (resistance to alcohol-containing gasoline) was evaluated by following the JIS-K6258 and immersing the test crosslinked sheet in mixed oil of fuel oil C / ethanol (EtOH) = 80/20 adjusted to 40°C and obtaining a volume swelling degree ΔV (unit: %) after 48 hours. The lower the volume swelling degree, the more superior the resistance to fuel oil is. The results are shown in Table 1.

### Example 2

Other than changing a use quantity of acrylonitrile, in the same way as that in the example 1, an acrylic resin (acrylic resin b2) was obtained, wherein the acrylonitrile monomer units was in an amount of 47.6%, an average particle diameter was 0.13 µm or so, a weight average molecular weight of 1110000 and a glass transition temperature was 30.0°C.

Other than using a polymer alloy produced by 40 parts of particles of the acrylic resin b2 and 60 parts of the acrylonitrile-butadiene copolymer rubber in the example 1, a crosslinked sheet having a thickness of 2 mm for test was produced in the same way as that in the example 1, and the cold resistance, the ozone resistance, gasoline impermeability and resistance to fuel oils were evaluated. The results are shown in Table 1.

### Example 3

Other than using n-butyl acrylate instead of ethyl acrylate and changing a use quantity of acrylonitrile, an acrylic resin (acrylic resin b3) was obtained, wherein the acrylonitrile monomer units was in an amount of 44.5%, an average particle diameter was 0.11 µm or so, a weight average molecular weight of 1,150,000 and a glass transition temperature was 26.8°C. By using particles of the acrylic resin b3, a crosslinked sheet having a thickness of 2 mm for test was produced in the same way as that in the example 1, and the cold resistance, the ozone resistance, gasoline impermeability and resistance to fuel oils were evaluated. The results are shown in Table 1.

### Example 4

Other than changing a use quantity of acrylonitrile, an acrylic resin (acrylic resin b4) was obtained, wherein the acrylonitrile monomer units was in an amount of 49.3%, an average particle diameter was 0.10 µm or so, a weight average molecular weight of 1,140,000 and a glass transition temperature was 31.8°C. Other than using a polymer alloy produced by 40 parts of particles of the acrylic resin b4 and 60 parts of the acrylonitrile-butadiene copolymer rubber in the example 1, a crosslinked sheet having a thickness of 2 mm for test was produced in the same way as that in the example 1, and the cold resistance, the ozone resistance, gasoline impermeability and resistance to fuel oils were evaluated. The results are shown in Table 1.

### Comparative Example 1

Other than changing a use quantity of acrylonitrile, an acrylic resin (acrylic resin b5) was obtained, wherein the acrylonitrile monomer units was in an amount of 26.5%, an average particle diameter was 0.11 µm or so, a weight average molecular weight of 1,100,000 and a glass transition temperature was 11.2°C. By using particles of the acrylic resin b5, a crosslinked sheet having a thickness of 2 mm for test was produced in the same way as that in the example 1, and the cold resistance, the ozone resistance, gasoline impermeability and resistance to fuel oils were evaluated. The results are shown in Table 1.

### Comparative Example 2

Other than changing a use quantity of acrylonitrile, an acrylic resin (acrylic resin b6) was obtained, wherein the acrylonitrile monomer units was in an amount of 66.5%, an average particle diameter was 0.13 µm or so, a weight average molecular weight of 1,160,000 and a glass transition temperature was 51.2°C. By using particles of the acrylic resin b6, a crosslinked sheet having a thickness of 2 mm for test was produced in the same way as that in the example 1, and the cold resistance, the ozone resistance, gasoline impermeability and resistance to fuel oils were evaluated. The results are shown in Table 1.

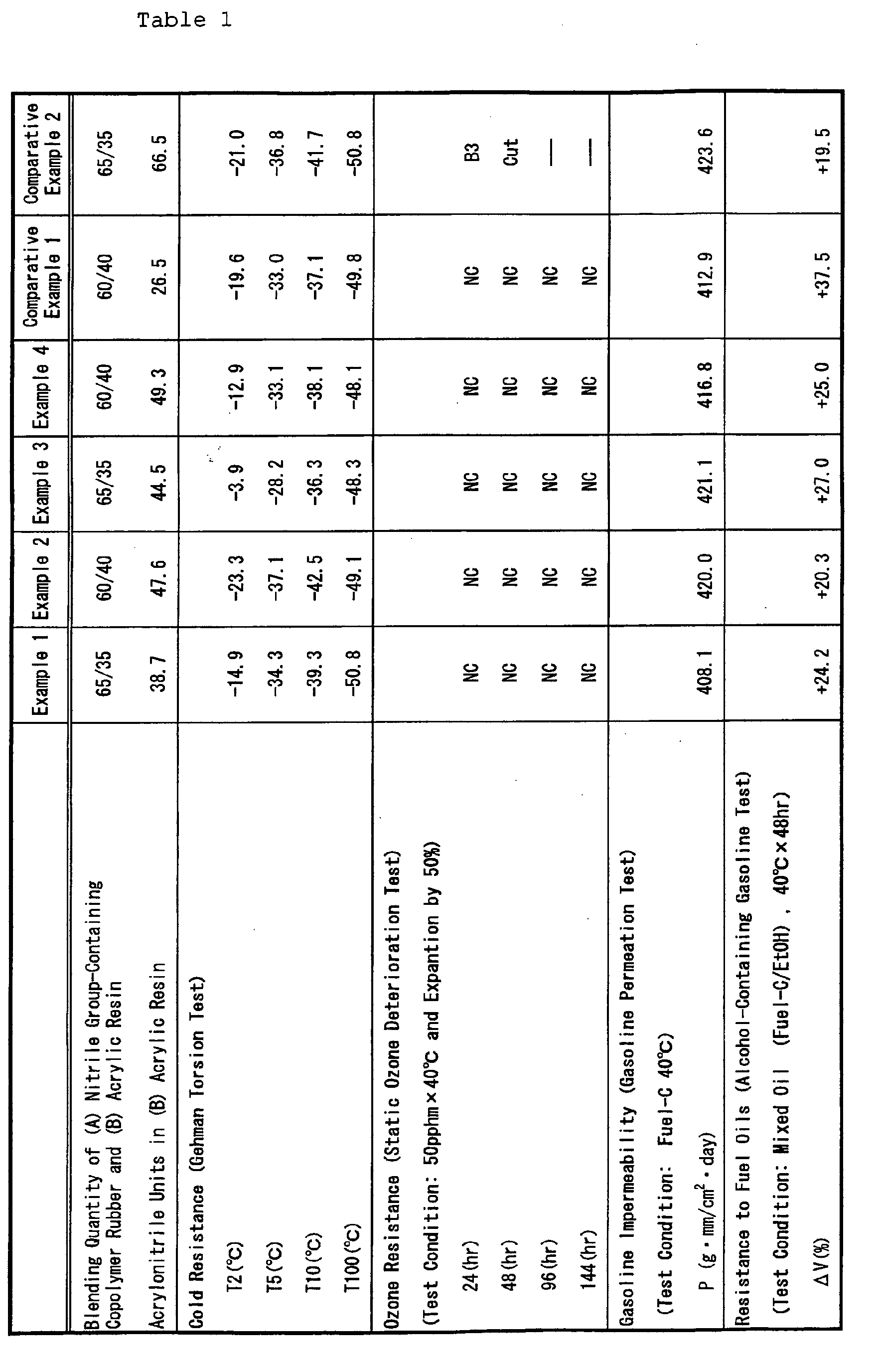

As shown in Table 1, the comparative examples 1 and 2, wherein a content of acrylonitrile monomer units in the acrylic resin is out of a range of the present invention, exhibited excellent cold resistance and gasoline permeability. However, it was confirmed that the resistance to fuel oils tended to become poor. Also, cracks arose in a short time as within 24 hours, and the ozone resistance was confirmed to be insufficient.

On the other hand, the examples 1 to 4, wherein a content of acrylonitrile monomer units in the acrylic resin was in the range of the present invention, it was confirmed that cracks did not arise even under a severe condition of expansion by 50% and the ozone resistance was also excellent in addition to the cold resistance, gasoline impermeability and resistance to fuel oils.

### Example 5

Other than changing an amount of the acrylonitrile-butadiene copolymer rubber to 75 parts and an amount of the acrylic resin b1 to 25 parts from those in the example 1, a crosslinked sheet having a thickness of 2 mm for test was produced in the same way as that in the example 1, and the cold resistance, the ozone resistance, gasoline impermeability and resistance to fuel oils were evaluated. Almost the same results as those in the example 1 were obtained in all points.

### Comparative Example 3

Other than changing an amount of the acrylonitrile-butadiene copolymer rubber to 35 parts and an amount of the acrylic resin b1 to 65 parts from those in the example 1, a crosslinked sheet having a thickness of 2 mm for test was produced in the same way as that in the example 1, and the cold resistance, the ozone resistance, gasoline impermeability and resistance to fuel oils were evaluated. Almost the same results as those in the example 1 were obtained in all points, but there was a tendency of losing the rubber elasticity.

### Comparative Example 4

Other than changing an amount of the acrylonitrile-butadiene copolymer rubber to 95 parts and an amount of the acrylic resin b1 to 5 parts from those in the example 1, a crosslinked sheet having a thickness of 2 mm for test was produced in the same way as that in the example 1, and the cold resistance, the ozone resistance, gasoline impermeability and resistance to fuel oils were evaluated. Almost the same results as those in the example 1 were obtained in all points, but there was a tendency of deteriorating the ozone resistance.

As explained above, from the results of the example 5, comparative example 3 and comparative example 4, a polymer alloy having a content of an acrylic resin (B) in an amount of exceeding 60% (the comparative example 3) exhibited poor rubber elasticity, and a polymer alloy having a content of an acrylic resin in an amount of less than 10% (the comparative example 4) exhibited declined ozone resistance.

On the other hand, a polymer alloy of the present invention, wherein a content of an acrylic resin (B) is in a range of 10 to 60% has excellent cold resistance, ozone resistance, gasoline impermeability and resistance to fuel oils (the example 5).

### Industrial Applicability

As explained above, according to the present invention, it is possible to provide a polymer alloy suitably used as a fuel hose material, having excellent balance of ozone resistance and resistance to fuel oils (in particular, resistance to alcohol-containing gasoline) while maintaining cold resistance and gasoline impermeability; a crosslinked object of the polymer alloy; and a fuel hose composed of the crosslinked object.

## Claims

1. A polymer alloy comprising 40 to 90 wt% of nitrile copolymer rubber (A) and 10 to 60 wt% of an acrylic resin (B), wherein:
said acrylic resin (B) comprises (meth)acrylic ester monomer units and α,β-ethylenically unsaturated nitrile monomer units; and
a content of said α,β-ethylenically unsaturated nitrile monomer units is larger than 27 wt% but not larger than 65 wt% with respect to a total amount of said acrylic resin (B).

2. The polymer alloy as set forth in claim 1, wherein said nitrile copolymer rubber (A) comprises α,β-ethylenically unsaturated nitrile monomer units, and a content of the α,β-ethylenically unsaturated nitrile monomer units in said nitrile copolymer rubber (A) is 30 to 80 wt% .

3. The polymer alloy as set forth in claim 1, wherein a content of said (meth)acrylic ester monomer units in said acrylic resin (B) is 40 to 65 wt%.

4. The polymer alloy as set forth in claim 1, wherein a content of said α,β-ethylenically unsaturated nitrile monomer units with respect to a total amount of said acrylic resin (B) is 35 wt% or larger and 60 wt% or smaller.

5. The polymer alloy as set forth in claim 1, wherein a content of said nitrile copolymer rubber (A) with respect to a total amount of said nitrile copolymer rubber (A) and said acrylic resin (B) is 60 to 80 wt%.

6. The polymer alloy as set forth in claim 1, wherein a content of said acrylic resin (B) with respect to a total amount of said nitrile copolymer rubber (A) and said acrylic resin (B) is 20 to 40 wt%.

7. The polymer alloy as set forth in claim 1, furthermore comprising a crosslinking agent.

8. A crosslinked object obtained by crosslinking the polymer alloy as set forth in claim 7.

9. A fuel hose comprising the crosslinked object as set forth in claim 8.
